# EUROPEAN PATENT APPLICATION

(11) **EP 4 675 597 A1**
(43) Date of publication of application: **07.01.2026**
(21) Application number: 25186706.5
(22) Date of filing: 01.07.2025
(51) Int. Cl.: G09F 3/16, G09F 3/20

(54) **MARKER BALL MOUNTING DEVICE, AND MARKER BALL DEPLOYMENT SYSTEM AND METHOD**

(30) Priority: 01.07.2024 IL 31404324
(71) Applicant: Kronos Aerial Photography Ltd., 4951337 Petach tikva (IL)
(72) Inventor: Malka, Machluf Eliyahu, Petach Tikva (IL); Nachmany, Gil, Binyamina (IL)
(74) Representative: Schlich

(57) **Abstract**

A marker ball mounting device (130,230), comprises:
a) a spring-loaded clamp (231), adapted with a spring-loaded arrangement to force and maintain said spring-loaded clamp in a closed state, and with a collapsible trigger (232) capable of forcibly holding said spring-loaded clamp in an open state, wherein said spring-loaded clamp comprises pivotally connected rotatable jaws (231a), the top portions (231b) of which are capable of detachably connecting with a suspension device (120), and the bottom portions (231c) of which are capable of clamping a cable (2); and
b) a seat (230a) that attaches to the side of a marker ball (1) and supports said spring-loaded clamp (231),
wherein said spring-loaded clamp is configured to detachably connect with a suspension device (120) while being held in an open state by said collapsible trigger (232), and to clamp onto a cable (2) and simultaneously disconnect from said suspension device when said cable trips said collapsible trigger, forcing said spring-loaded clamp to close.

## Description

### FIELD OF THE INVENTION

The present invention relates to apparatuses for aboveground cables. More specifically, the present invention relates to a marker ball mounting device and an airborne deployment system for mounting marker balls onto aboveground cables, such as overhead power lines cables or power supply cables for electric trains.

### BACKGROUND OF THE INVENTION

Electric power is an essential requirement for humankind and the availability of electricity has become a part of the standard of living. The transport of electricity from power plants to users is done mainly via aboveground powerlines, which are spread for long distances. Since aboveground cables blend with the surrounding landscape and may pose a significant hazard to incoming low-flying air vehicles, marker balls are commonly deployed to improve the visibility of the aboveground cable and prevent fatal accidents.

Various marking measures are in use for distinguishing aboveground cables from the surrounding landscape, such as marker balls, which are being manually mounted onto powerlines by utility grid workers using man-lift crane baskets and helicopters. Unfortunately, this manner of marker ball deployments places human personnel at risk of high altitudes and near live electricity. Furthermore, in many cases, sections of aboveground cables are inaccessible due to rough terrain and various physical obstacles.

The present invention is directed at providing a suitable solution for the abovementioned problem.

### SUMMARY OF THE INVENTION

In the first aspect, the present invention discloses a marker ball mounting device, comprising: a) a spring-loaded arrangement (e.g., a torsion spring, a linear spring), or another spring-loaded arrangement) to force and maintain said a loading frame that further forces one or more marker ball mounting device(s) towards the cable to ensure that the cable trips the collapsible trigger thereof, such as in the case of an inclined cable. in a closed state, and a collapsible trigger capable of forcibly holding said spring-loaded clamp in an open state, and b) a seat that attaches to the side of a marker ball and supports said spring-loaded clamp, wherein said seat comprises a clasp that supports said spring-loaded clamp and provides firm attachment thereof with said seat, wherein said spring-loaded clamp is configured to detachably connect with a suspension device while being held in an open state by said collapsible trigger and to automatically clamp onto a cable, that trips said collapsible trigger, and to simultaneously disconnect from said suspension device.

In another aspect, the present invention relates to a marker balls deployment system configured to deploy marker balls onto cables, comprising: a) one or more marker ball mounting device(s) according to the above, and b) a suspension device configured to releasably connect with said one or more units of said marker ball mounting device, wherein said suspension device facilitates the carrying of a marker ball by said one or more marker ball mounting device(s) and forcing engagement thereof with a cable such that the cable trips the collapsible trigger of said one or more marker ball mounting device(s), thereby enabling simultaneous mounting of said marker ball onto said cable and disconnecting said one or more marker ball mounting device(s) from said suspension device.

According to an embodiment of the present invention, the suspension device comprises a loading frame that further forces one or more marker ball mounting device(s) towards the cable to ensure that the cable trips the collapsible trigger thereof, such as in the case of an inclined cable.

In yet another aspect, a marker balls deployment method is provided, comprising the steps of: a) providing a system according to any of the above, b) attaching one or more marker ball mounting device(s), to a marker ball, c) shifting said one or more marker ball mounting device(s) to an open state while connecting the same to the suspension device and positioning the collapsible trigger of said mounting device(s) to forcibly hold the same in the open state, and d) carrying said suspension device with said marker ball toward a cable and forcing engagement of said one or more marker ball mounting device(s) with said cable such that the cable trips the collapsible trigger of said one or more marker ball mounting device(s), wherein the tripping of said collapsible trigger enables the shifting of said one or more marker ball mounting device(s) into a closed state while clamping said cable and simultaneously disconnecting from said suspension device, thereby enabling its carriage away from said cable.

In certain embodiments, step d of the carrying of said suspension device with said marker ball toward a cable is performed by an air vehicle, by attaching said suspension device to a structural member of said air vehicle. Alternatively, step d of carrying said suspension device with said marker ball toward a cable is performed manually, or by an automated robotic apparatus.

### BRIEF DESCRIPTION OF DRAWINGS

For a better understanding of various embodiments of the present invention and to show how the same may be carried into effect, reference is made, by way of example, to the accompanying illustrative drawings, in which:
**Fig. 1** schematically illustrates an exemplary configuration of a marker ball deployment system, according to an embodiment of the present invention;
**Figs. 2A-2C** schematically illustrate partial internal views of an entirely mechanical marker ball mounting device and the clamping operation thereof, according to an embodiment of the present invention;
**Fig. 3A** shows an optional configuration of a mounting device, according to an embodiment of the present invention;
**Fig. 3B** illustrates interchangeable cable adapters detachably attached within the mounting device of **Fig. 3A****;**
**Fig. 4** schematically illustrates an exemplary rotation test assembly, according to an embodiment of the present invention;
**Figs. 5A-5D** schematically illustrate an entirely mechanical mounting device, according to an embodiment of the present invention;
**Fig. 6** shows a marker ball mounting onto an inclined aboveground cable, according to an embodiment of the present invention;
**Figs. 7A-7B** schematically illustrate the operation of an over-centered collapsible trigger of marker ball mounting device, according to an embodiment of the present invention;
**Figs. 8A-8B** schematically illustrate an optional configuration of a marker ball deployment system that utilizes an alternatively designed payload suspension device, according to an embodiment of the present invention; and
**Figs. 9A-9B** schematically illustrate an exemplary connection between the marker ball mounting device and a marker ball, according to an embodiment of the present invention;
**Fig. 10** schematically illustrates an alternative configuration of a marker ball deployment system, according to an embodiment of the present invention;
**Fig. 11** schematically illustrates a mounting device with integrated descending guides, according to an embodiment of the present invention;
**Fig. 12** illustrates a rigid suspension frame and a manually operated clamping device for the manual deployment of marker balls, according to an embodiment of the present invention;
**Figs. 13A-13B** illustrate different alternative collapsible triggers, according to embodiments of the present invention; and
**Figs. 14A-14B** illustrate lateral and upwards mounting of a marker ball on a cable, according to embodiments of the present invention.

In the above drawings, structural details of the invention are shown to provide a fundamental understanding of the invention, where the following detailed description, taken with the drawings, makes apparent to those skilled in the art how several forms of the invention may be embodied in practice.

### DETAILED DESCRIPTION OF EMBODIMENTS OF THE INVENTION

In one aspect, the present invention relates to a marker ball mounting device configured to attach to a marker ball and, therewith, to connect to an air vehicle. The marker ball mounting device disclosed herein is further configured to independently clamp onto a cable, when being lowered thereon, to provide a firm grasp of the cable, and simultaneously detach from the air vehicle.

In another aspect, the present invention relates to a marker balls deployment system configured to deploy marker balls onto aboveground cables. The marker ball deployment system disclosed herein comprises a payload suspension device that connects with an air vehicle and releasably connects with one or more units of the marker ball mounting device of the present invention. Thereby a marker ball can be harnessed (i.e., through one or more units of the proposed marker ball mounting device and a suitable payload suspension device such as described herein below) to an air vehicle, carried to a desired section of an aboveground cable, secured thereon while releasing its connection to the payload suspension device, so that the air vehicle (i.e., with the payload suspension device) can return for loading the next marker ball to be deployed.

In the following detailed description, non-limiting embodiments of the present invention are discussed and illustrated, where references are made to accompanying drawings. These embodiments and accompanying drawings should be understood as non-limiting examples of implementing the present invention. Furthermore, terms such as "optionally", "for instance", "for example", "exemplary", "e.g.,", "may", etc., refer to optional features being selected in certain embodiments of the invention for the sake of simplicity and clarity of explanation. It should be understood, however, that optional features mentioned in different embodiments may be used, in conjunction and/or separately, to implement further embodiments of the present invention.

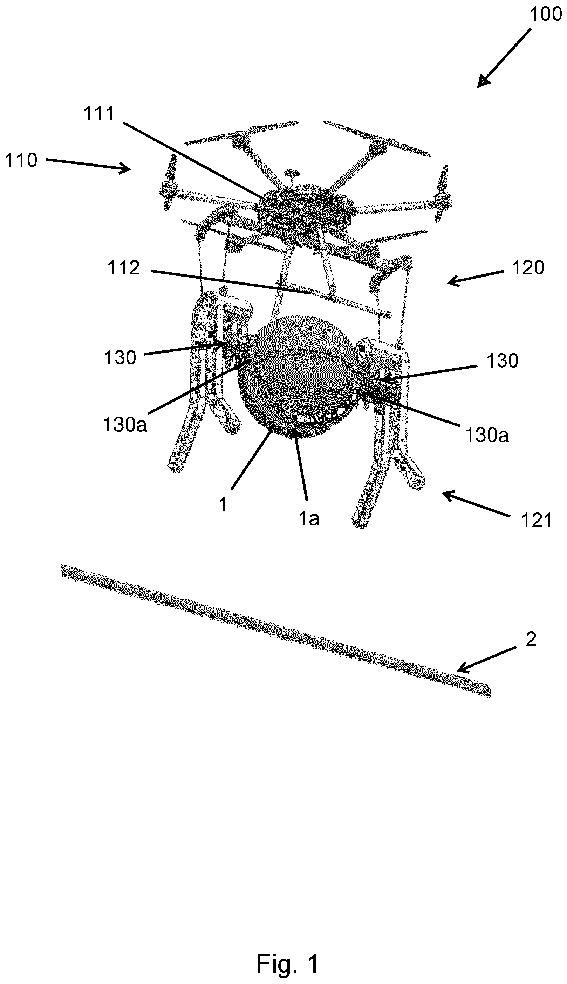

**Fig. 1** schematically illustrates an exemplary configuration of a marker ball deployment system 100, according to an embodiment of the present invention. System 100 comprises an air vehicle, such as a drone 110, a payload suspension device 120 attached to a structural member of drone 110 (e.g., by a ball connector that is releasably threaded into a corresponding ball joint on the main body 111 of drone 100, or by another suitable harnessing means that connects with the drone landing gear 112, or to any other structural member thereof), and two units of a marker ball mounting device 130 attached via seats 130a to both sides of a cleft marker ball 1 having a cleft 1a that enables the sliding of marker ball 1 onto cable 2 from above while receiving cable 2 therein.

In certain embodiments, when marker ball 1 is lowered onto cable 2, the latter slides within cleft 2 to a determined extent, where cable 2 triggers the clamping of marker ball mounting devices 130 thereon and, simultaneously, the release of the connection between marker ball mounting devices 130 and suspension device 120. In this regard, the term "simultaneously" should be understood as at the same time, or promptly following the clamping of cable 2.

In certain embodiments, payload suspension device 120 further comprises guides 121 that converge upwardly to enable a guided descent of marker ball 1 as soon as cable 2 becomes confined between the converging guides 121. In this manner, drone 110 should only obtain a rough alignment position (i.e., of cleft 1a with cable 2) above cable 2 before beginning its descent, rather than being required for a more accurate alignment.

While the above clamping and releasing actions of devices 130 may be performed by one or more electrically controlled and powered actuators, in certain embodiments marker ball mounting devices 130 are independent mechanisms that do not require powered driving means or power supply, thus, the clamping and releasing actions are triggered by mechanical engagement of cable 2 therewith, as further described hereinafter.

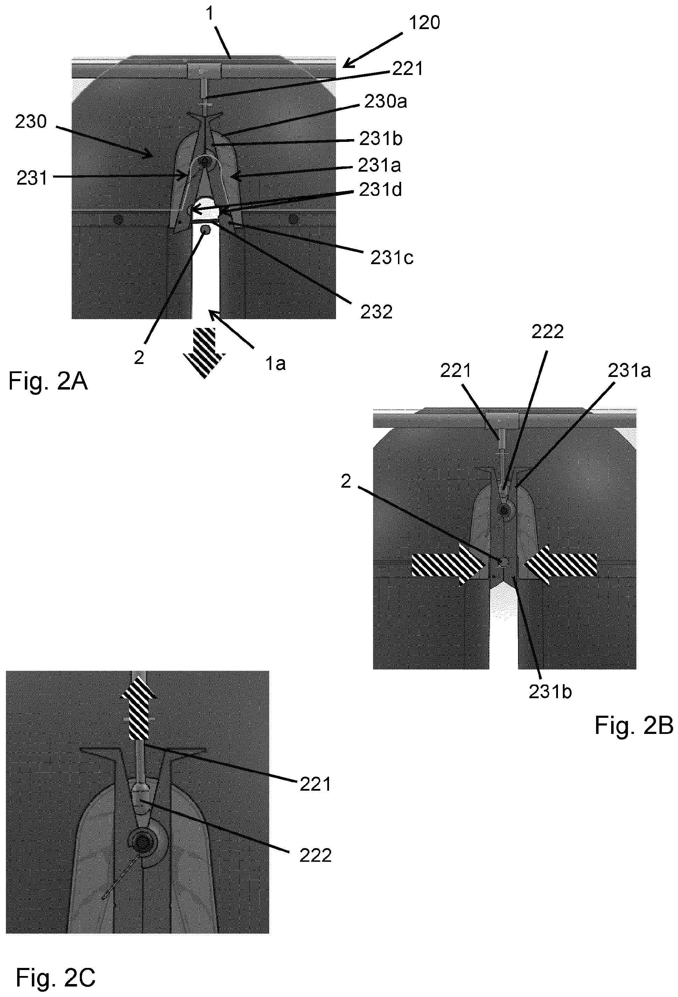

**Figs. 2A-2C** schematically illustrate partial internal views of an entirely mechanical marker ball mounting device 230 (i.e., having a non-powered mechanism) and its clamping operation, according to an embodiment of the present invention. Mounting device 230 comprises a marker ball seat 230a that is firmly attached to ball marker 1, and to which a spring-loaded clamp 231 is connected. Clamp 231 comprises pivotally connected rotatable jaws 231a with opposed top portions 231b and bottom portions 231c, wherein clamp 231 is maintained with the rotatable jaws 231a in at least two states, one of which is an open state wherein bottom portions 231c are distant and top portions 231b are close or engaged together, whereas in a second closed state bottom portions 231c are close or engaged together and top portions 231b are distant.

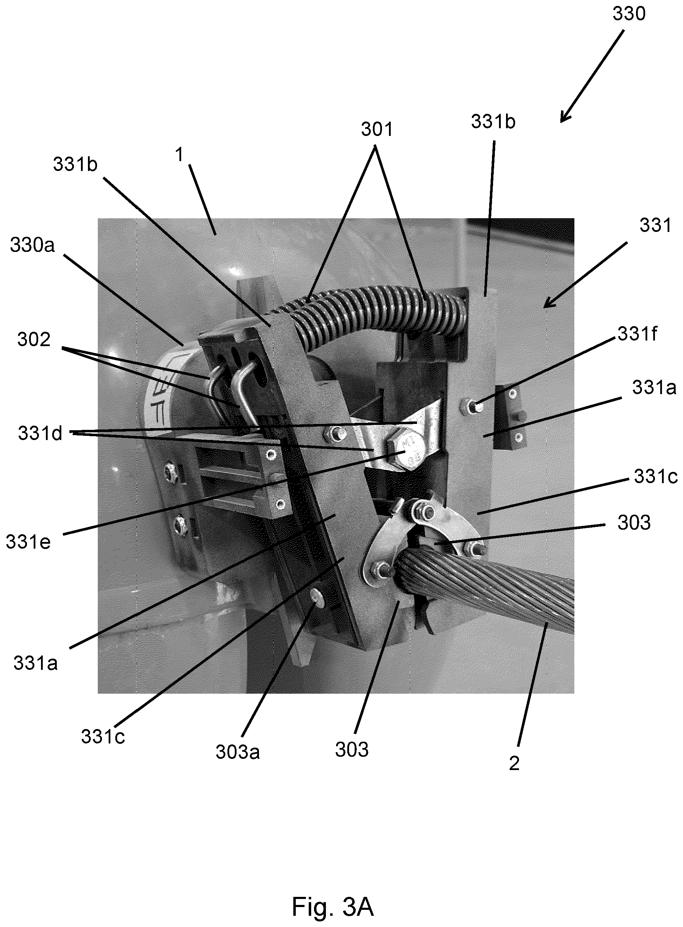

Clamp 231 may be forced into or maintained in the closed state by a spring-loaded arrangement. Such an arrangement may comprise a torsion spring, integrated with the rotatable connecting hinge of jaws 231a, a linear spring compressed between the opposed top portions 231b of jaws 231a (such as illustrated in **Fig. 3A**), or another spring-loaded arrangement for maintaining clamp 231 at a normally closed state unless forcibly held in an open state.

The springs of the abovementioned spring-loaded arrangement are preselected to have a predetermined constant while considering the type of overhead cable 2 (e.g., the friction coefficient and peripheral shape) and applied loading (e.g., the marker ball weight, typical side winds, etc.).

In certain configurations, an adjustable spring loading is obtained by a threaded adjustment mechanism (e.g., that may generate a local compression of a section in the middle of the spring).

In **Fig. 2A** marker ball 1 is mounted on suspension device 120 with mounting device 230 and clamp 231 in an open state, prior to the mounting of marker ball 1 onto cable 2. Top portions 231b are adapted to connect with a connector 221 of suspension device 120 by grasping a securement element 222 thereof. Such element 222 may comprise a laterally or radially protruding latch, two or more latches, spring-loaded protruding balls, and the like. Correspondingly, top portions 231b may comprise one or more recession(s) or hole(s) adapted to receive any of the above protrusions of securement element 222. Thereby, mounting device 230 may releasably attach to suspension device 120 by forcibly maintaining clamp 231 in an open state where securement element 222 is locked within top portions 231b.

To maintain mounting device 230 and clamp 231 in an open state against the spring load that acts to close clamp 231, bottom portions 231c comprise a collapsible trigger 232 that extends between bottom portions 231c and is temporarily locked therebetween, thus, keeping them apart (e.g., sufficiently spaced to allow a cable of a determined diameter passage therebetween) upon being tripped.

Accordingly, a marker ball 1 may be connected to suspension device 120 and thereby to a carrying air vehicle (e.g., drone 110), by:
- attaching one or more mounting device(s) 230 to the marker ball 1;
- shifting the mounting device(s) 230 to an open state so that top portions 231a close around securement element 222, thus, grasping the same;
- positioning collapsible trigger 232 to forcibly hold the mounting device(s) 230 in an open state, such as by erecting collapsible trigger 232 between bottom portions 231c; and
- connecting payload suspension device 120 to drone 110.
Subsequently, drone 110 can be flown while carrying marker ball 1 above a desired aboveground cable 2 and aligned therewith, such that the bottom portions 231c of mounting devices 230 are aligned with the corresponding cable section, followed by descending drone 110 over cable 2, to engage the mounting device(s) 230 therewith such as in the following manner: As drone 110 descends and thus, lowers marker ball 1 onto cable 2, cable 2 slides into cleft 1a, and at a certain extent of sliding it trips collapsible trigger 232, resulting in the closure of bottom portions 231c, which then clamps of cable 2 within recessions 231d thereof. Simultaneously (and as illustrated in **Fig. 2B**), top portion 231b opens and releases securement element 222 (also shown in **Fig. 2C**), and thus, the connection between payload suspension device 120 and mounting device 230. Accordingly, at this point, drone 110 can lift off and return to reload another marker ball to be deployed. The simultaneous clamping of the cable and detachment from the air vehicle prevents redundant loading over the aboveground cable 2 during its mounting thereon.

**Fig. 3A** shows an optional configuration of a mounting device 330 comprising seat 330a (interchangeable with seats 130a and 230a of **Figs. 1** **and** **2A**), a spring-loaded clamp 331 (interchangeable with clamp 231 of **Figs. 2A-2Cb)** whereby a marker ball 1 is mounted onto an overhead cable 2, according to an embodiment of the present invention. Clamp 331 comprises two jaws 331a having upper portions 331b and bottom portions 331c, where jaws 331a are rotatably connected through hinged arms 331d that are rotatably interconnected by hinge 331e, where each arm 331d is connected to the corresponding jaw 331a by attachment 331f or may be molded therewith. In this embodiment, spring-loaded clamp 231 is clamping an overhead cable 2, while being maintained in a closed state, by two compressed linear springs 301 threaded on guide shafts 302 between top portions 331b of jaws 331a, where the compressed state of springs 301 presses apart top portions 331b.

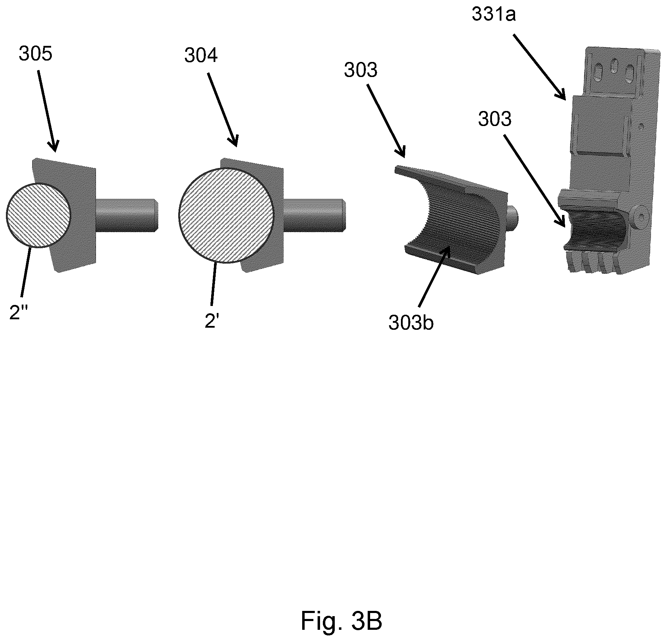

Clamp 331 further comprises interchangeable cable adapters 303, 304, and 305 (**Fig. 3B**) detachably attached within lower portions 331c of jaws 331a (e.g., by threaded bolts 303a). Different cable adapters 303-305 may have a surface area 303b of different roughness levels and different internal diameters that correspond to different types of cables and cables of different diameters, as illustrated by cables 2' and 2" of **Fig. 3B****.**

Furthermore, while, for the sake of simplicity, the present invention and particularly adapters 303-305 are illustrated herein as intended for mounting a marker ball 1 onto a substantially round cable 2, it should be readily understood by a person skilled in the art, that the present invention may be readily adapted for mounting different objects on different overhead cables, wires, solid profiles and other constructive elements of different cross section (e.g., a square, rectangular, and/or of different geometry than a round cross section), without departing the scope of the present invention. Correspondingly, the term "cable" used herein may be interchangeable with "wire", "profile", "rod", "beam", and other elements to which objects such as a marker ball, or other objects, may be mounted by utilizing the mounting device, or the deployment system of the present invention.

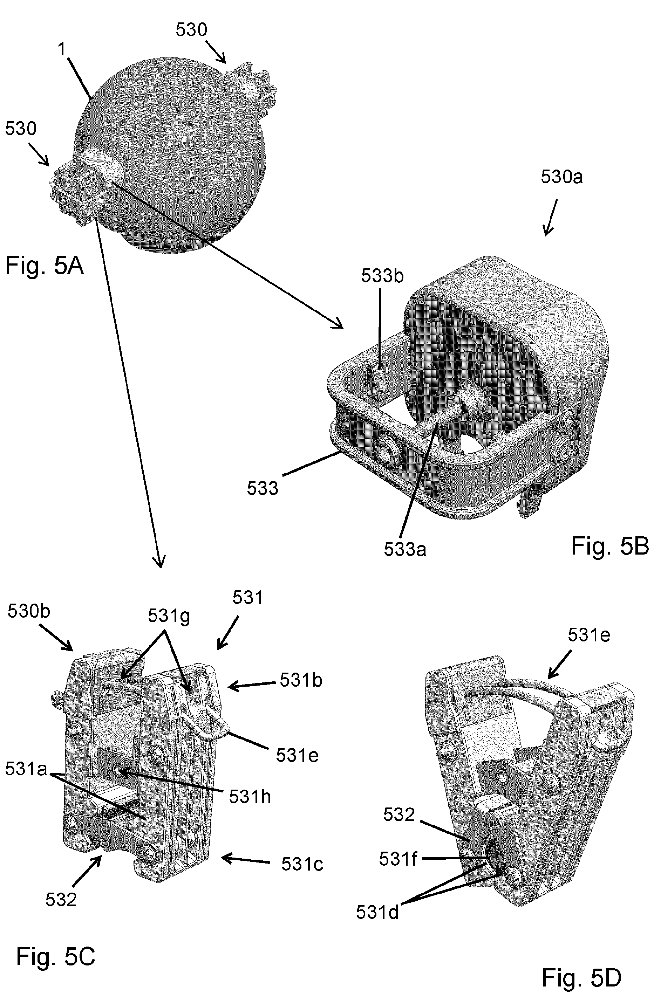

The interchangeable cable adapters 303-305 of different internal diameters are highly advantageous as they ensure that as cable 2 of a known diameter engages and trips the collapsible trigger (e.g., trigger 232 of **Fig. 2A** or trigger 532 of **Fig. 5C**), it is aligned with depressions 231d **(****Fig. 2A****),** thereby providing a proper clamping of cable 2 therein. Furthermore, the internal surface 303b and/or the entirety of adapters 303-305 may be constructed of an elastic material such as synthetic rubber (e.g., Styrene-Butadiene Rubber).

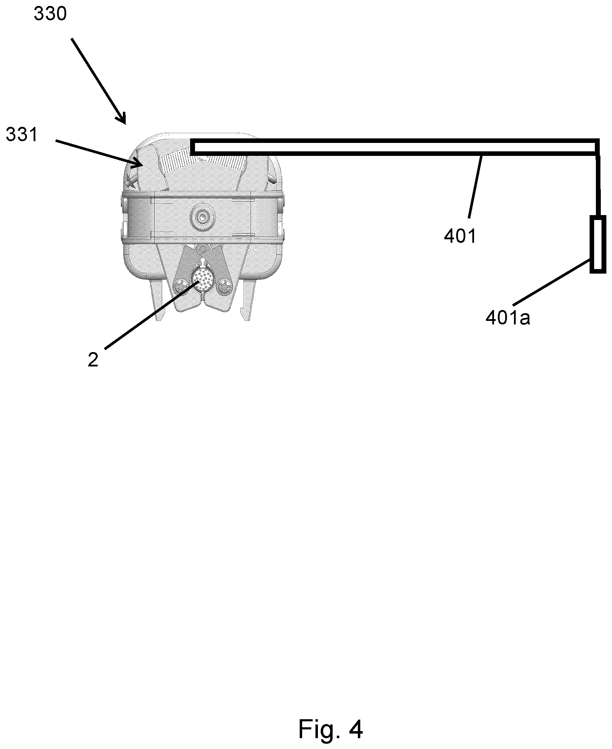

**Fig. 4** schematically illustrates an exemplary rotation test assembly 400 of a marker ball mounting device, where the clamping strength and stability of clamp 331 and/or cable adapters 303-305 thereof are being tested. A spring-loaded clamp 331 of a mounting device 330 clamps a cable 2, while a moment is applied thereon by a weight 401a, which is connected to a rod 401 of a predetermined length. Marker ball mounting device 130 or 330 should firmly and stably clamp cable 2 without deforming or twisting cable 2 under a predetermined moment that represents various wind loading as well as the loading applied during the deployment and clamping of the marker ball on cable 2, such as may be applied by lateral movement of drone 110 just as clamp 331 closes and clamps cable 2.

**Figs. 5A-5D** schematically illustrate an entirely mechanical (i.e., non-powered) mounting device 530, according to an embodiment of the present invention. In **Fig. 5A****,** two units of mounting device 530 are attached on both sides of a marker ball 1. Each mounting device 530 comprises a spring-loaded clamp 531 (enlarged views thereof are illustrated in **Figs. 5C and 5D**), which is similarly utilized as spring-loaded clamps (231, 331); a seat 530a that attaches to the side of marker ball 1 and comprises a clasp 533 that establishes secured support for clamp 531 and firm attachment thereof with seat 530a.

**Fig. 5B** illustrates an enlarged view of seat 530a and clasp 533. It is noted in **Fig. 5B****,** that a support rod 533a extends between seat 530a and clasp 533, onto which a hollow hinge 531h **(****Fig. 5C****)** of spring-loaded clamp 531 is threaded when mounting device 530 is assembled. Furthermore, support protrusions 533b extend inwardly from clasp 533 and engage with corresponding depressions in spring-loaded clamp 531 and provide stable and firm support thereto while, for instance, restricting swivel thereof around support rod 533a. Nevertheless, while clasp 533 of **Fig. 5B** completely surrounds spring-loaded clamp 531, different embodiments of the invention may require shorter support for spring-loaded clamp 531 that is sufficient for a stable and firm attachment thereof with seat 530a, such as illustrated in **Fig. 3A****.**

**Fig. 5C** illustrates spring-loaded clamp 531 adapted with a geometric locked collapsible trigger 532 that maintains the spring-loaded clamp 531 with its jaws' bottom portions 531c in an open state, namely, sufficiently apart to allow an object of predetermined size (e.g., a cable 2 of a predetermined diameter) to pass therebetween. Since such an object (e.g., cable 2) engages trigger 532 and pushes its bottom upwardly, trigger 532 collapses, and the spring load forces the jaws 531a of clamp 531 to rotate so that its bottom portions 531c close **(****Fig. 5D****)** and clamp the abovementioned object between recessions 531d.

Further shown in **Figs. 5C-5D** are a closed loop guide rail 531e threaded through the top portions 531b of spring-loaded clamp 531, for supporting spring 301 **(****Fig. 3A****),** and stabilizing the assembly of clamp 531 and its rotation; and internal pads 531f, which are utilized to spread the compression applied on an object clamped therebetween. Fig. 5C further shows grasping holes 531g which are utilized to grasp protrusions of securement element 222 **(****Figs. 2B-2C****)**

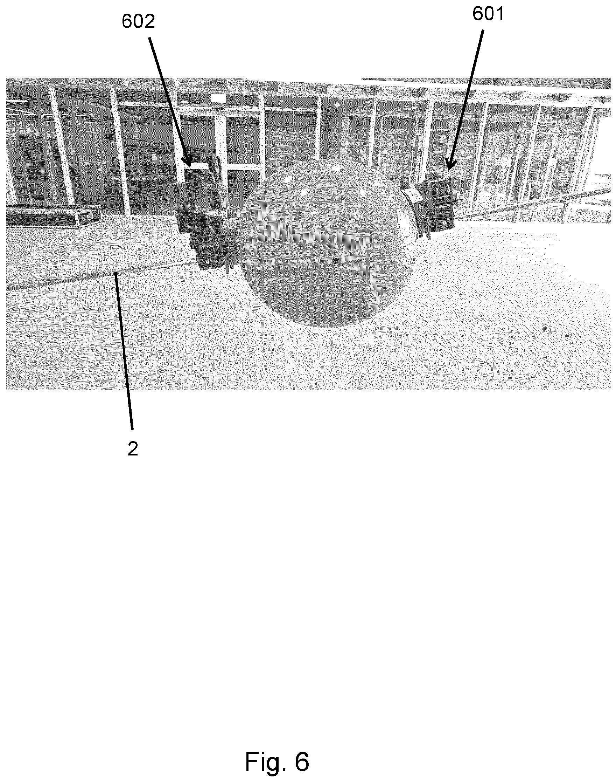

According to an embodiment of the present invention, a predetermined diameter difference between hollow hinge 531h and support rod 533a is provided to enable the mounting of a marker ball 1 (i.e., with two mounting devices 530 attached to both sides thereof), onto an inclined cable 2 as shown in **Fig. 6****.** When the first mounting device 601 engages and clamps the inclined cable 2 at a higher point thereof, the diameter difference between hinge 531h and support rod 533a allows an inclined relationship therebetween, that enables uneven descending of suspension 120 until the second mounting device 602 engages the lower point of the inclined cable and clamps the same. Thereby, redundant loading on cable 2 is avoided during the further descending, the first device 601 doesn't induce.

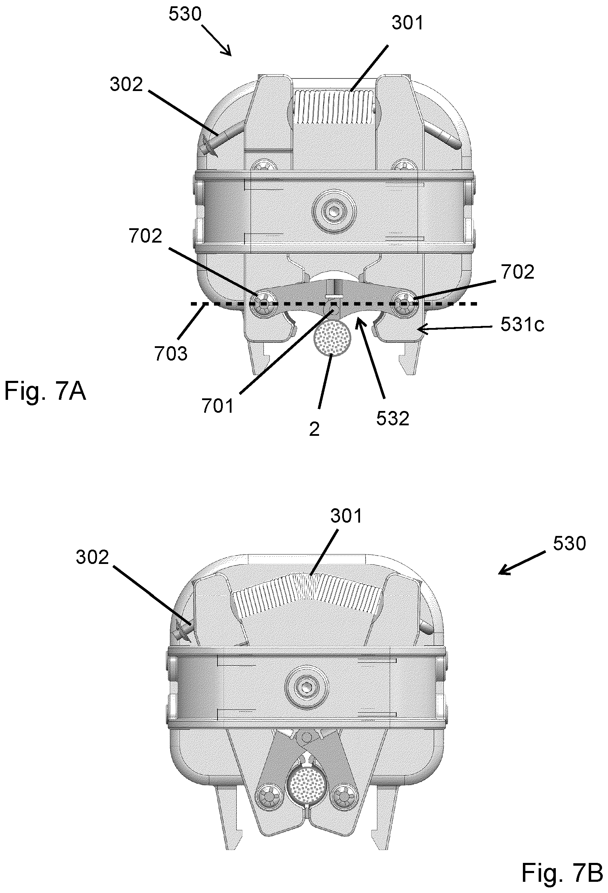

**Figs. 7A-7B** schematically illustrate the operation of an over-centered collapsible trigger 532 of marker ball mounting device 530, according to an embodiment of the present invention. As mounting device 530 descends over cable 2, which pushes a hinge 701 of collapsible trigger 532 upwardly, the latter rotates upwardly around hinged connections 702 thereof (to the bottom portion 531c of jaws 531a). When hinge 701 crosses the centerline 703 of hinged connections 702 it unlocks the over-centered geometric lock thus tripping trigger 532. The load applied by spring(s) 301 forces the jaws of clamp 531 to rotate, shifting bottom portions 531c to a closed state, clamping cable 2 therebetween **(****Fig. 7B****).**

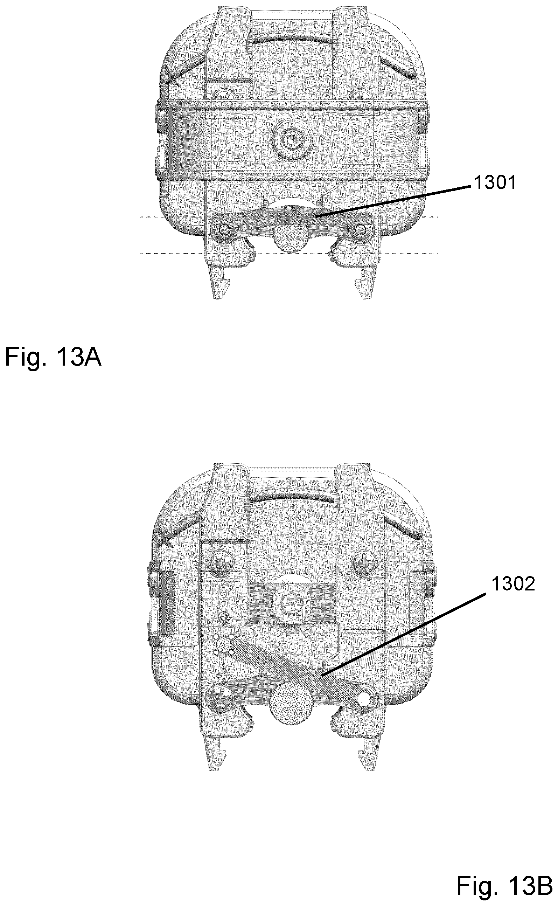

Of course, trigger 232 may be differently designed, for instance, as a collapsible spring-loaded latch between bottom portions 531c of any shape. Furthermore, trigger 232 may be an entirely detachable element that completely disengages from clamp 531 (or 231) and falls to the ground when pushed by an object/cable. Such optional triggers 1301 and 1302 are illustrated in **Figs. 13A-13B****.**

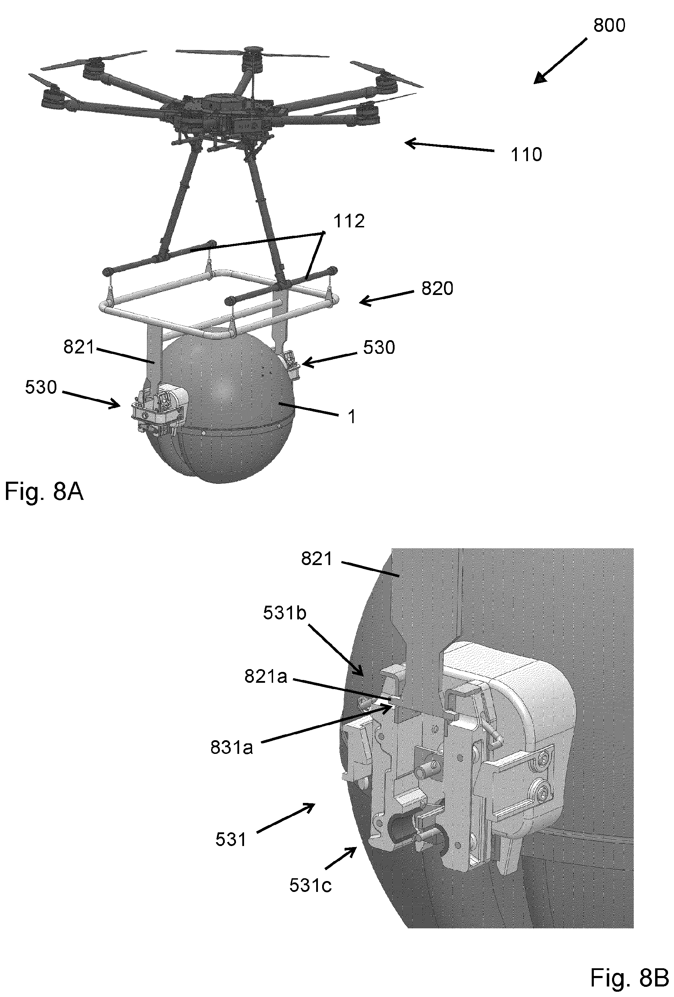

**Fig. 8A** schematically illustrates an optional configuration of a marker ball deployment system 800 that utilizes an alternatively designed payload suspension device 820 (yet similarly operated), according to an embodiment of the present invention. Payload suspension device 820 is shaped as a rectangular frame mounted to the landing gear 112 of drone 110, while two connectors 821 thereof extend downwardly with their lower portion grasped by two marker ball mounting devices 530.

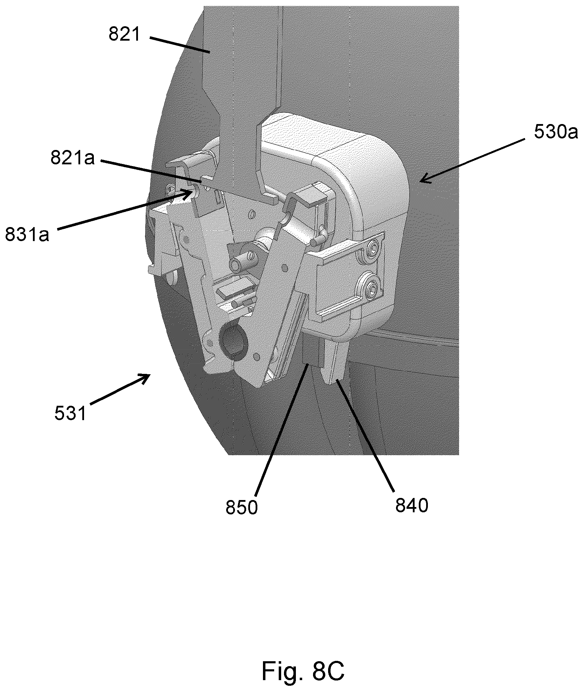

**Fig. 8B** illustrates an enlarged cross-sectional view of one of the marker ball mounting devices 530 with connector 821 grasped therein. It is noted that the lower portion of connector 821 comprises two lateral extensions 821a that are threaded in corresponding holes 831a (also illustrated as grasping holes 531g in **Fig. 5C**) in the top portions 531b of spring-loaded clamp 531. As clamp 531 closes and its jaws' top portions 531b shift apart **(****Fig. 8C****),** lateral extensions 821a are released from holes 831a and, thus, suspension device 820 disengages from clamp 531.

It should be realized that the shape of guide rail 531e threaded through the top portions 531b of spring-loaded clamp 531 is predetermined to enable passage of connector 821 with lateral extensions 821a thus allowing a smooth lift of drone 110 with payload suspension device 820.

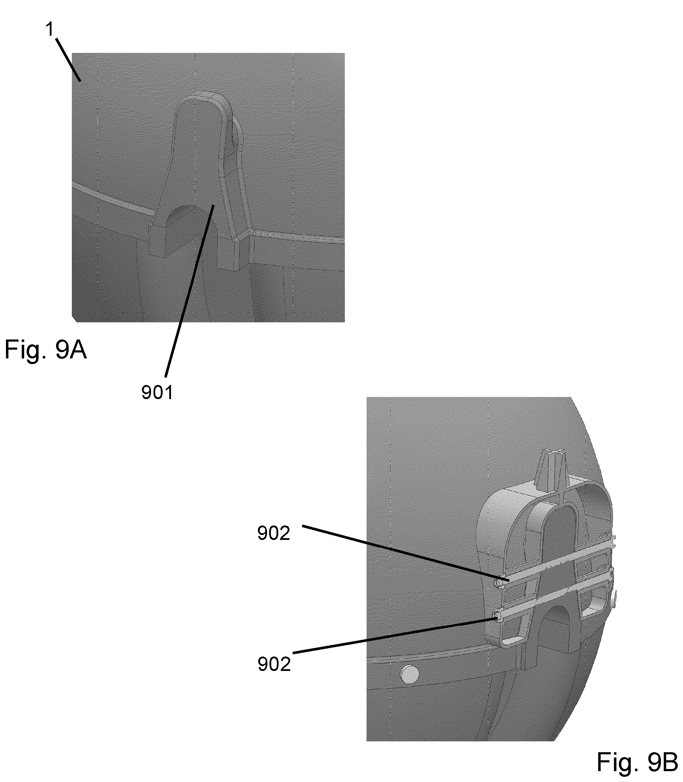

Further shown in **Fig. 8C** are grasping arms that secure the attachment of seats 530a to attachment flanges 901 **(****Figs. 9A-9B****)** of marker ball 1.

**Figs. 9A-9B** schematically illustrate an exemplary threaded connection between seat 530a **(****Fig. 5B****)** and marker ball 1 that comprises attachment flanges 901, therefore the rear portion of seat 530a is correspondingly shaped to thread from above on flanges 901 and comprises securement rods 902 that secures flanges 901 so that following the threading of seat 530a onto flanges 901, the latter are clamped between the rear portion and the of seat 530a and securement rods 902 thereof. It will be readily realized by a person skilled in the art that alternate attachment arrangements between mounting devices (130, 230, 330, or 530) and ball 1 may be utilized.

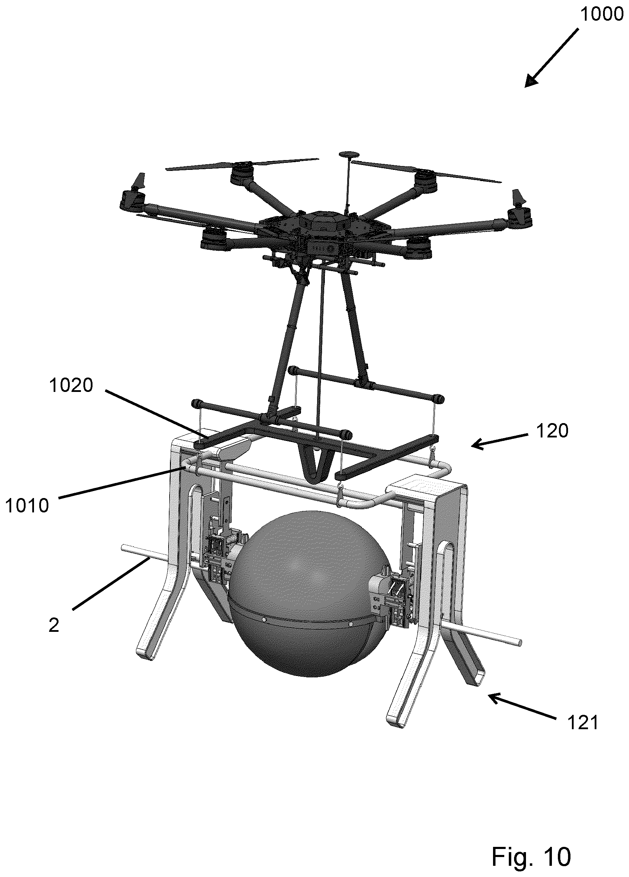

**Fig. 10** schematically illustrates an alternative configuration of a marker ball deployment system 1000, according to an embodiment of the present invention, in which suspension device 120 comprises a rigid suspension frame 1010 and a loading frame 1020 of added weight, utilized to apply predetermined load downwardly to further force suspension frame 1010 and thereby mounting devices 530 downwardly ensuring that cable 2 trips trigger 532 such as in the case of an inclined cable 2 illustrated in **Fig. 6****.** Further shown in **Fig. 10** are guides 121 that converge upwardly to enable a guided descent of marker ball 1 over cable 2.

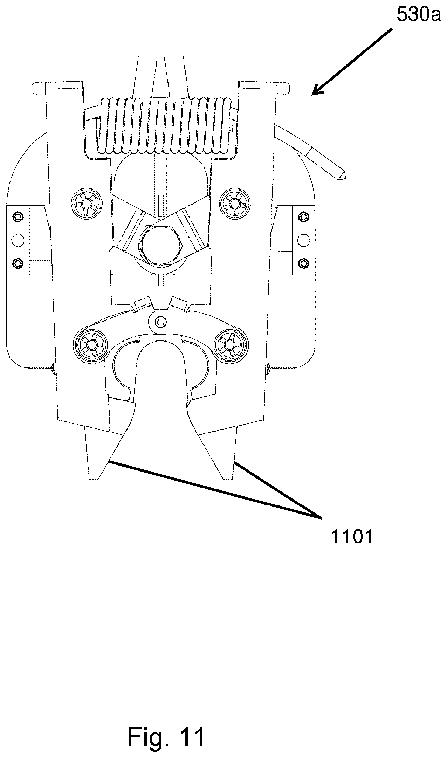

In certain embodiments, smaller guides are integrated with seat 530a of the mounting device to provide a more accurate guided descent, as schematically illustrated by guides 1101 of **Fig. 11****.**

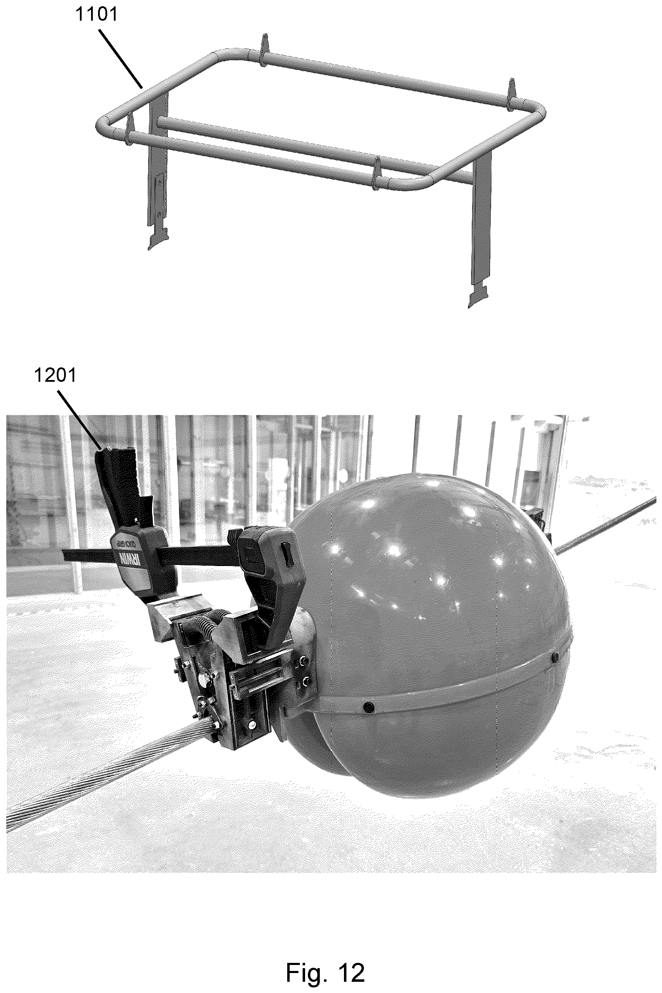

In another embodiment of the present invention, a rigid suspension frame 1010 and manually operated clamping device(s) 1201 (illustrated in **Fig. 12**) may be used to manually install marker balls 1 on cable 2 by authorized personnel, e.g., using lifting equipment. Rigid suspension frame 1010 may be used for lifting a marker ball 1 connected therewith through mounting devices 530 over cable 2 and then descending the same for mechanically operating devices 530 to clamp cable 2. Subsequently, to dismount marker ball 1 from cable 2, clamping device(s) 1201 may be used to force top portions 531b of clamps 531 to engage together and grasp the lateral extensions 821a and connector 821, thereby enabling the dismount of marker ball 1 from cable 2.

In the case of a manual marker ball installation, non-cleft marker balls may be mounted onto the aboveground cables 2. In such cases, the mounting device 531 is connected to a first portion, e.g., the top portion of the marker ball 1, and upon mounting the top portion on the cable, the other portion of the marker ball is fastened to the already mounted portion. A suitable suspension device may be adapted for such manual handling (e.g., comprising a rigid frame 1010 configured with a reduced weight).

In an embodiment, a robotic apparatus is utilized to perform an automatic marker ball mounting similarly to the abovementioned manual mounting.

A person skilled in the art will readily realize that the various components and systems disclosed herein may be implemented in different combinations, dimensions, and numbers of components. For instance, in certain embodiments, the recessions 231d, the spring parameters, and the relevant dimensions of clamps 231, 331, or 531 are suitably determined to correspond to a cable diameter range of between 13mm and 25mm. Furthermore, the construction materials and dimensions of the mounting device and payload suspension device disclosed herein may be selected, in certain embodiments, to enable the deployment of marker balls of different weights.

The following examples describe optional implementations of combined embodiments of the present invention:

Example 1 is a specific embodiment, where a marker ball mounting device 330, as shown in **Fig. 3A****,** is provided. The device comprises a seat 330a attached to the marker ball 1 and a spring-loaded clamp 331. The spring-loaded arrangement comprises two linear springs 301 compressed between the top portions 331b of the jaws 331a. The bottom portions 331c of the jaws are configured to receive interchangeable cable adapters (303, 304, 305) as shown in **Fig. 3B****,** allowing the device to be adapted for cables (2, 2', 2") of different diameters.

Example 2 is a specific embodiment, where a marker ball deployment system 1000 of **Fig. 10** is used on an inclined cable, as shown in **Fig. 6****.** The system comprises one or more marker ball mounting devices (130, 530) and a suspension device 120. The suspension device comprises a rigid suspension frame 1010 and a loading frame 1020 of added weight. The loading frame 1020 applies a downward force to ensure that the mounting devices are forced towards cable 2, ensuring that the cable reliably trips the collapsible trigger 532 of each mounting device, particularly when the mounting devices engage the cable at different times due to the incline.

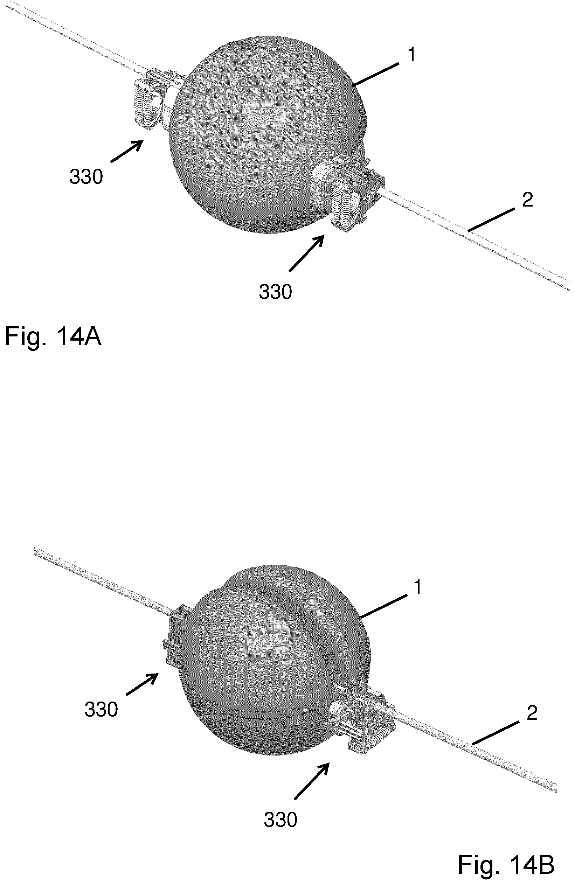

Example 3 is a specific embodiment, where a marker ball deployment system, e.g., system 1000, which is adapted to carry a marker ball 1 (i.e., or a different mountable object) by one or more mounting devices (e.g., devices 130, 230, 330, or 530) a suspension device 120 or 820, which is adapted for approaching a cable 2 (i.e., or alternative mount, such as a structural member of a target structure onto which the mountable object should be mounted) laterally or from below. For instance, such a suspension device may include a monolithic rigid frame or an equally rigid assembled frame that may be carried manually, by a robotic platform, or by an airborne vehicle, such that the mountable object is mounted on the cable/mount by approaching the same from below, then elevating the maker ball/mount upon engaging the mounting device(s) with the cable/mount, which trips the collapsible trigger, thus causing the spring-loaded clamps of the mounting device(s) to clamp the cable/mount and simultaneously detach from the suspension device. **Figs. 14A-14B** illustrate marker balls 1, laterally **(****Fig. 14A****)** and upwardly **(****Fig. 14B****)** mounted on cables 2, by utilizing mounting devices 330.

Moreover, the air vehicle that conveys the marker ball deployment as disclosed herein should not be limited to any specific flight control system, however, it should be noted that the independent clamping and releasing of the payload suspension device 120 is highly advantageous and provides flexible operation of the disclosed system, as well as wide range of flight control scenarios. In an embodiment, the air vehicle carries one or more remotely controlled cameras that enable the monitoring of the mounting/dismounting process by the operator.

By way of clarification and for avoidance of doubt, as used herein and except where the context requires otherwise, the term "comprise" and variations of the term, such as "comprising", "comprises" and "comprised", are not intended to exclude further additions, components, integers or steps.

## Claims

1. A marker ball mounting device (130,230), comprising:
a) a spring-loaded clamp (231), adapted with a spring-loaded arrangement to force and maintain said spring-loaded clamp in a closed state, and with a collapsible trigger (232) capable of forcibly holding said spring-loaded clamp in an open state, wherein said spring-loaded clamp comprises pivotally connected rotatable jaws (231a), the top portions (231b) of which are capable of detachably connecting with a suspension device (120), and the bottom portions (231c) of which are capable of clamping a cable (2); and
b) a seat (230a) that attaches to the side of a marker ball (1) and supports said spring-loaded clamp (231),
wherein said spring-loaded clamp is configured to detachably connect with a suspension device (120) while being held in an open state by said collapsible trigger (232), and to clamp onto a cable (2) and simultaneously disconnect from said suspension device when said cable trips said collapsible trigger, forcing said spring-loaded clamp to close.

2. A marker ball mounting device according to claim 1, wherein said mounting device (530) comprises a clasp (533) that supports said spring-loaded clamp (531) and provides firm attachment thereof with the seat (530a).

3. A marker ball mounting device according to claim 1 or claim 2, wherein the spring-loaded arrangement comprises a torsion spring.

4. A marker ball mounting device according to claim 1 or claim 2, wherein the spring-loaded arrangement comprises a linear spring.

5. A marker ball mounting device according to any one of claims 1 to 4, wherein the bottom portions (331c) of the jaws (331a) of the spring-loaded clamp (331) comprise one or more interchangeable cable adapters (303, 304,305).

6. A marker ball deployment system (100) configured to deploy marker balls onto cables, comprising:
a) one or more marker ball mounting devices (130) according to claim 1; and
b) a suspension device (120) configured to releasably connect with said one or more units of said marker ball mounting device,
wherein said suspension device facilitates the carrying of a marker ball by said one or more marker ball mounting devices and forcing engagement thereof with a cable such that the cable trips the collapsible trigger of said one or more marker ball mounting device(s), thereby enabling simultaneous mounting of said marker ball onto said cable and disconnecting said one or more marker ball mounting device(s) from said suspension device.

7. A marker ball deployment system according to claim 6, wherein the suspension device (120) comprises a loading frame (1020) that further forces the one or more marker ball mounting devices (130) towards the cable (2) to ensure that the cable trips the collapsible trigger (232,532) thereof, such as in the case of an inclined cable.

8. A marker ball deployment method, comprising the steps of:
a) providing a marker ball deployment system (100) according to claim 6 or claim 7;
b) attaching one or more marker ball mounting devices (130) to a marker ball (1);
c) shifting said one or more marker ball mounting devices to an open state while connecting the same to the suspension device (120), and positioning the collapsible trigger (232) of said mounting devices to forcibly hold the spring-loaded clamp (231) in the open state; and
d) carrying said suspension device with said marker ball toward a cable (2) and forcing engagement of said one or more marker ball mounting devices with said cable such that the cable trips the collapsible triggers of said one or more marker ball mounting devices,
wherein the tripping of said collapsible trigger enables the shifting of said one or more marker ball mounting devices into a closed state while clamping said cable and simultaneously disconnecting from said suspension device, thereby enabling its carriage away from said cable.

9. A marker ball deployment method according to claim 8, wherein step d) of carrying said suspension device with said marker ball toward a cable is performed by an air vehicle (110), by attaching said suspension device to a structural member (112) of said air vehicle.

10. A marker ball deployment method according to claim 8, wherein step d) of carrying said suspension device with said marker ball toward a cable is performed manually.

11. A marker ball deployment method according to claim 8, wherein step d) of carrying said suspension device with said marker ball toward a cable is performed by an automated robotic apparatus.
